# EUROPEAN PATENT APPLICATION

(11) **EP 3 366 883 A1**
(43) Date of publication of application: **29.08.2018**
(21) Application number: 18156692.8
(22) Date of filing: 14.02.2018
(51) Int. Cl.: F01D 5/00

(54) **METHODS AND SYSTEM FOR TURBINE COMPONENT REPAIR WITH ADDITIVE MANUFACTURING**

(30) Priority: 28.02.2017 US 201715444934
(71) Applicant: General Electric Company, Schenectady, NY 12345 (US)
(72) Inventor: SRINIVASAN, Dheepa, 560066 Bangalore, Karnataka (IN); KULKARNI, Madhusudan, 390013 Vadodara (IN)
(74) Representative: Fischer, Michael Maria

(57) **Abstract**

Various embodiments include approaches for repairing a turbine component (12). In some cases, a method includes: removing a turbine component (12) from a turbine rotor assembly (14); identifying at least one flaw (16) in the turbine component (12); and direct metal laser melting (DMLM) or direct metal laser depositing (DMLD) a fill material (90) to fill the at least one flaw (16) in the turbine component (12), forming a repaired turbine component (100).

## Description

### FIELD OF THE INVENTION

The subject matter disclosed herein relates to turbomachinery. More particularly, the subject matter disclosed herein relates to repairing components in turbomachines.

### BACKGROUND OF THE INVENTION

Turbomachinery, for example, steam turbomachinery such as steam turbines, are designed to have useable lifetimes that span for years, and even decades. During the course of their lifespan, these machines and their components require repair and/or maintenance. For example, in steam turbines, the rotor is commonly examined and repaired to account for any imbalances in rotation, or wear-and-tear on components such as turbine blades. Repairing blades, in particular, can be challenging due to the short pitch of these blades as they are fit into the rotor slots. That is, when attempting to repair/replace blades in a steam turbine, the small distances between adjacent blades and between blades and surrounding components makes it difficult to accurately fit those blades into their desired position.

### BRIEF DESCRIPTION OF THE INVENTION

Various embodiments include approaches for repairing a turbine component. In some cases, a method includes: removing a turbine component from a turbine rotor assembly; identifying at least one flaw in the turbine component; and direct metal laser melting (DMLM) or direct metal laser deposition (DMLD) processes to a fill material to fill the at least one flaw in the turbine component, forming a repaired turbine component.

A second aspect of the disclosure includes a system having: an additive manufacturing system for receiving a scan of a turbine component removed from a turbine assembly; and a control system coupled with the additive manufacturing system, the control system configured to identify at least one flaw in the turbine component based upon the scan; and instruct the additive manufacturing system to additively manufacture a fill material in the at least one flaw in the turbine component to form a repaired turbine component, in response to identifying the at least one flaw in the turbine component.

A third aspect of the disclosure includes a method including: removing a turbine component from a turbine rotor assembly; optically scanning the turbine component to identify at least one flaw in the turbine component; and direct metal laser melting (DMLM) or direct metal laser depositing (DMLD) a fill material to fill the at least one flaw in the turbine component, forming a repaired turbine component, wherein the repaired turbine component does not require a heat treatment to set the fill material in the at least one flaw after the DMLM or the DMLD.

### BRIEF DESCRIPTION OF THE DRAWINGS

These and other features of this disclosure will be more readily understood from the following detailed description of the various aspects of the disclosure taken in conjunction with the accompanying drawings that depict various embodiments of the disclosure, in which:
FIG. 1 shows a schematic depiction of an environment including a system according to various embodiments of the disclosure.
FIG. 2 shows a schematic depiction of a repaired component formed according to various embodiments of the disclosure.
FIG. 3 shows a block diagram of an additive manufacturing process including a non-transitory computer readable storage medium storing code representative of a template according to embodiments of the disclosure.

It is noted that the drawings of the various aspects of the invention are not necessarily to scale. The drawings are intended to depict only typical aspects of the invention, and therefore should not be considered as limiting the scope of the invention. In the drawings, like numbering represents like elements between the drawings.

### DETAILED DESCRIPTION OF THE INVENTION

As indicated herein, the subject matter disclosed relates to turbomachinery. More particularly, the subject matter disclosed herein relates to repairing components in turbomachines.

In contrast to conventional approaches, various aspects of the disclosure include systems and methods for repairing turbine components without the need for subsequent heat treatment. That is, the approaches disclosed herein can utilize additive manufacturing to fill flaws in turbine components (e.g., steam turbine components) during the repair process, and in particular, utilize approaches which do not require subsequent heat treatment (e.g., direct metal laser melting, (DMLM) or direct metal laser deposition (DMLD)).

In the following description, reference is made to the accompanying drawings that form a part thereof, and in which is shown by way of illustration specific example embodiments in which the present teachings may be practiced. These embodiments are described in sufficient detail to enable those skilled in the art to practice the present teachings and it is to be understood that other embodiments may be utilized and that changes may be made without departing from the scope of the present teachings. The following description is, therefore, merely illustrative.

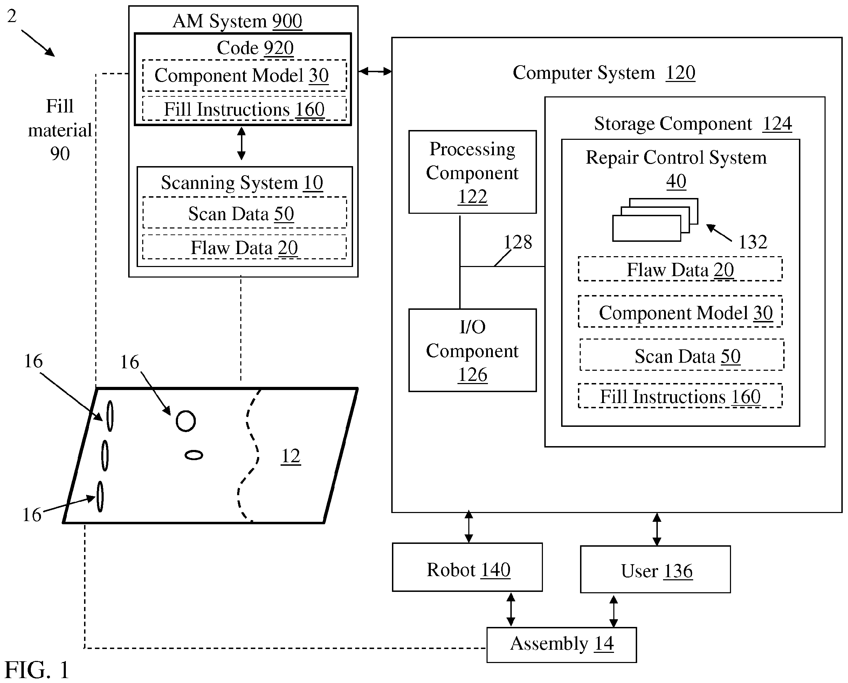

FIG. 1 shows a schematic depiction of an environment including a system 2 according to various embodiments of the disclosure. As shown, system 2 can include an additive manufacturing (AM) system 900 coupled with a repair control system 40 (via a computing device 120), as described further herein. In some cases, AM system 900 can include a scanning system 10 configured to scan a turbine component (or, component) 12 removed from a turbine rotor assembly (assembly) 14. Component 12, in some cases, can include at least one of a turbine blade, nozzle, bucket, shroud, flange, etc.

Scanning system 10 may be physically incorporated into AM system 900, or may be a separate physical component connected with (e.g., able to communicate, via wireless, hard-wired, or other means) AM system 900. In various embodiments, scanning system 10 is configured to scan component 12 to identify at least one flaw 16 in that component 12. Scanning system 10 can include an optical scanning system blue light scanning system, white light scanning system or laser scanning system, and is configured to analyze component 12 and identify characteristics of flaw 16, including, e.g., size, shape, location, dimension. In some cases, scanning system 10 provides (e.g., transmits or otherwise communicates or makes available) data about flaw 16 (flaw data 20) to a computing system 120, which includes a repair control system 40 according to various embodiments. In various embodiments, flaw 16 includes a characteristic that is recognizable by scanning system 10 which differs from a model (component model) 30 of component 12. In some cases, scanning system 10 stores or otherwise obtains a copy of component model 30 in order to compare against a scan (scan data 50) to identify flaw 16 (flaw data 20). In other cases, repair control system 40 can obtain scan data 50 and compare with component model 30 in order to identify flaw 16. In any case, scanning system 10 scans component 12 for the purpose of detecting any flaw 16 that may be present in component 12.

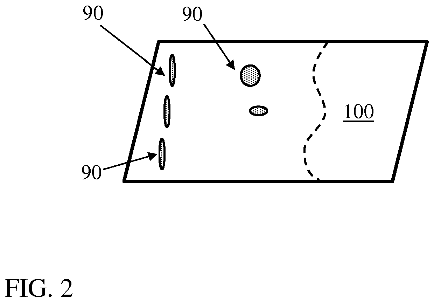

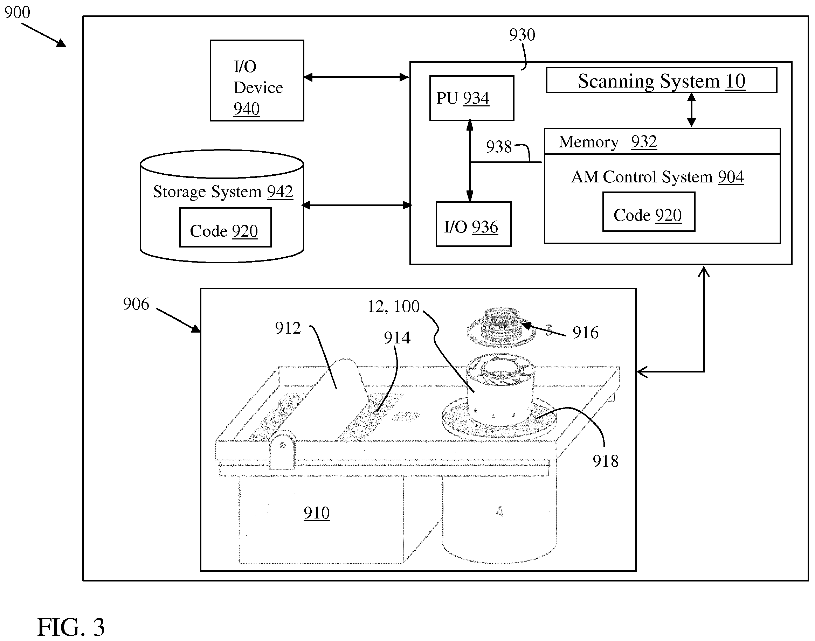

As shown in FIG. 1, system 2 can also include AM system 900, which may be coupled with or incorporate scanning system 10. Additional details of additive manufacturing system 900 are shown in FIG. 3. Additionally, system 2 is shown including repair control system 40 coupled (e.g., via wireless and/or hardwired means) with scanning system 10 and additive manufacturing system 900, via a computer system 120 (also referred to as a computing device). In various embodiments, repair control system 40 is configured to control additive manufacturing system 900 (via fill instructions 160, which may be part of code 920) to selectively apply a fill material 90 to correct flaws 16 in component 12, in order to form a repaired component 100 (FIG. 2). Repair control system 40 can include any conventional electrical and/or mechanical control systems, and in various embodiments, may include logic configured to provide instructions to scanning system 10 and/or AM system 900 according to particular inputs, as described herein. In various embodiments, repair control system 40 is configured to perform actions including:

A) Identify at least one flaw 16 in component 12 from the scanning system 10. In some cases, repair control system 40 sends scanning instructions to AM system 900/scanning system 10 scan component 12. In other cases, a user 136 may initiate scanning of component 12, e.g., via controls in scanning system 10 and/or AM system 900.

B) In response to identifying flaw 16 (e.g., flaw data 20, in process A): instruct AM system 900 to additively manufacture fill material 90 in the at least one flaw 16 in component 12 to form repaired turbine component 100 (e.g., a repaired steam turbine component). In various embodiments, fill material 90 includes stainless steel, maraging steel, high-CrMoV steel, a nickel-based alloy or martensitic steel. In the case that fill material 90 includes stainless steel, that fill material 90 may include any form of stainless steel, and in some particular cases, may include stainless steel 304 (SS304), stainless steel 314 (SS314) or stainless steel 316 (SS316). In some particular cases, AM system 900 includes a direct metal laser melting or direct metal laser deposition (DMLM/DMLD) system, which is configured to effectively apply fill material 90 to flaw(s) 16 without requiring subsequent heat treatment. That is, in some cases, where AM system 900 includes a DMLM/DMLD system, repaired component 100 does not require a heat treatment to set fill material 90 in flaw(s) 16. The DMLM/DMLD process sets fill material 90 in flaw(s) 16 such that heat treatment is not required to finish the repair. That is, DMLM/DMLS directly melts or deposits the fill material 90 into flaws, forming a bond that does not require solidification by heating. Omitting heat treatment may reduce overall repair timeframe and cost, as well as reduce the likelihood of cracking or other structural failures from the repair.

With continuing reference to FIG. 1, system 2 can further include a robot 140 coupled (e.g., via wireless and/or hard-wired means) with repair control system 40. Robot 140 can include any conventional robotic device capable of grasping or otherwise transporting component 12 relative to assembly 14. In some cases, robot 140 includes a programmable or controllable (e.g., via wired or wireless control) robotic device including one or more working arms, moving platforms, grasping mechanisms (e.g., claw(s)) capable of manipulating component 12 and transporting component 12 to/from assembly 14. In some cases, robot 140 can include any conventional robotic device used in the manufacturing industry. In various embodiments, robot 140 is configured to remove component 12 from assembly 14 and/or install the repaired component 100 in assembly 14. In some cases, robot 140 and/or user 136 can interact with assembly 14 to install repaired component 100 or remove component 12. In various embodiments, component 12 is removed from assembly 14 prior to identifying flaw(s) 16. That is, user 136 and/or robot 140 can remove component 12 from assembly 14 in order to prepare component 12 for scanning. As noted herein, after removing component 12 from assembly, flaw(s) 16 can be identified in component 12 using, e.g., scanning system 10. After identifying flaw(s) 16, AM system 900 can apply fill material 90 (according to fill instructions 160), e.g., via DMLM/DMLS, to fill flaw(s) 16 and form repaired component 100.

Returning to FIG. 1, computer system 120 is shown including a processing component 122 (e.g., one or more processors), a storage component 124 (e.g., a storage hierarchy), an input/output (I/O) component 126 (e.g., one or more I/O interfaces and/or devices), and a communications pathway 128. In one embodiment, processing component 122 executes program code, such as repair control system 40, which is at least partially embodied in storage component 124. While executing program code, processing component 122 can process data, which can result in reading and/or writing the data to/from storage component 124 and/or I/O component 126 for further processing. Pathway 128 provides a communications link between each of the components in computer system 120. I/O component 126 can comprise one or more human I/O devices or storage devices, which enable a user 136 (e.g., human or machine user) to interact with computer system 120 and/or one or more communications devices to enable user 136 (e.g., human or machine user) to communicate with computer system 120 using any type of communications link. To this extent, repair control system 40 can manage a set of interfaces (e.g., graphical user interface(s), application program interface, and/or the like) that enable human and/or system interaction with repair control system 40.

In any event, computer system 120 can comprise one or more general purpose computing articles of manufacture (e.g., computing devices) capable of executing program code installed thereon. As used herein, it is understood that "program code" means any collection of instructions, in any language, code or notation, that cause a computing device having an information processing capability to perform a particular function either directly or after any combination of the following: (a) conversion to another language, code or notation; (b) reproduction in a different material form; and/or (c) decompression. To this extent, repair control system 40 can be embodied as any combination of system software and/or application software. In any event, the technical effect of computer system 120 is to control repair of component 12, as described herein.

Further, repair control system 40 can be implemented using a set of modules 132. In this case, a module 132 can enable computer system 20 to perform a set of tasks used by repair control system 40, and can be separately developed and/or implemented apart from other portions of repair control system 40. Repair control system 40 may include modules 132 which comprise a specific use machine/hardware and/or software. Regardless, it is understood that two or more modules, and/or systems may share some/all of their respective hardware and/or software. Further, it is understood that some of the functionality discussed herein may not be implemented or additional functionality may be included as part of computer system 120.

When computer system 120 comprises multiple computing devices, each computing device may have only a portion of repair control system 40 embodied thereon (e.g., one or more modules 132). However, it is understood that computer system 120 and repair control system 40 are only representative of various possible equivalent computer systems that may perform a process described herein. To this extent, in other embodiments, the functionality provided by computer system 120 and repair control system 40 can be at least partially implemented by one or more computing devices that include any combination of general and/or specific purpose hardware with or without program code. In each embodiment, the hardware and program code, if included, can be created using standard engineering and programming techniques, respectively.

Regardless, when computer system 120 includes multiple computing devices, the computing devices can communicate over any type of communications link. Further, while performing a process described herein, computer system 120 can communicate with one or more other computer systems using any type of communications link. In either case, the communications link can comprise any combination of various types of wired and/or wireless links; comprise any combination of one or more types of networks; and/or utilize any combination of various types of transmission techniques and protocols.

As discussed herein, repair control system 40 enables computer system 120 to control repair of a (e.g., turbomachine) component 12 using AM system 900. Repair control system 40 may include logic for performing one or more actions described herein. In one embodiment, repair control system 40 may include logic to perform the above-stated functions. Structurally, the logic may take any of a variety of forms such as a field programmable gate array (FPGA), a microprocessor, a digital signal processor, an application specific integrated circuit (ASIC) or any other specific use machine structure capable of carrying out the functions described herein. Logic may take any of a variety of forms, such as software and/or hardware. However, for illustrative purposes, repair control system 40 and logic included therein will be described herein as a specific use machine. As will be understood from the description, while logic is illustrated as including each of the above-stated functions, not all of the functions are necessary according to the teachings of the embodiments of the invention as recited in the appended claims.

In various embodiments, processes described herein can be iterated (repeated) periodically (e.g., according to schedule of x times per y period, and/or continuously) in order to aid in coating of one more portion(s) of one or more (turbomachine) component(s) 12. In some cases, one or more of the processed described herein can be repeated, for example, for a set of components 12 (e.g., turbomachine components such as a set of steam turbine blades).

It is understood that repaired component 100 (FIGS. 1-2) may be repaired using an additive manufacturing (AM) process, including any process of producing an object through the successive layering of material rather than the removal of material, which is the case with conventional processes. Additive manufacturing can create complex geometries without the use of any sort of tools, molds or fixtures, and with little or no waste material. Instead of machining components from solid billets of plastic, much of which is cut away and discarded, the only material used in additive manufacturing is what is required to shape the part. Additive manufacturing processes may include but are not limited to: 3D printing, rapid prototyping (RP), direct digital manufacturing (DDM), selective laser melting (SLM) and direct metal laser deposition/melting (DMLD/DMLM). As described herein, in the current setting, DMLD and DMLM have been found advantageous.

To illustrate an example of an additive manufacturing process, FIG. 3 shows a schematic/block view of an illustrative computerized additive manufacturing system 900 for repairing component 12 to form repaired component 100 (labeled as both component 12 and repaired component 100 to illustrate repair process). In this example, system 900 is arranged for DMLM/DMLD. It is understood that the general teachings of the disclosure are equally applicable to other forms of additive manufacturing. AM system 900 generally includes a computerized additive manufacturing (AM) control system 904 and an AM printer 906. AM system 900, as will be described, executes code 920 that includes a set of computer-executable instructions defining component 12, 100 (FIGS. 1-2) to physically repair component 12 and form repaired component 100. Each AM process may use different raw materials in the form of, for example, fine-grain powder, wire, a stock of which may be held in a chamber 910 of AM printer 906. In the instant case, component 12, 100 may be made of plastic/polymers or similar materials. As illustrated, an applicator 912 may create a thin layer of raw material 914 spread out as the blank canvas from which each successive slice of the final object (repaired component 100) will be created. In other cases, applicator 912 may directly apply or print the next layer onto a previous layer as defined by code 920 (including, e.g., component model 30 and/or fill instructions 160), e.g., where the material is a polymer. In the example shown, a laser or electron beam 916 fuses particles for each slice, as defined by code 920, Various parts of AM printer 906 may move to accommodate the addition of each new layer, e.g., a build platform 918 may lower and/or chamber 910 and/or applicator 912 may rise after each layer.

AM control system 904 is shown implemented on computer 930 as computer program code. To this extent, computer 930 is shown including a memory 932, a processor 934, an input/output (I/O) interface 936, and a bus 938. Further, computer 930 is shown in communication with an external I/O device/resource 940 and a storage system 942. In general, processor 934 executes computer program code, such as AM control system 904, that is stored in memory 932 and/or storage system 942 under instructions from code 920 representative of repaired component 100 (FIGS. 1-2), described herein. While executing computer program code, processor 934 can read and/or write data to/from memory 932, storage system 942, I/O device 940 and/or AM printer 906. Bus 938 provides a communication link between each of the components in computer 930, and I/O device 940 can comprise any device that enables a user to interact with computer 940 (e.g., keyboard, pointing device, display, etc.). Computer 930 is only representative of various possible combinations of hardware and software. For example, processor 934 may comprise a single processing unit, or be distributed across one or more processing units in one or more locations, e.g., on a client and server. Similarly, memory 932 and/or storage system 942 may reside at one or more physical locations. Memory 932 and/or storage system 942 can comprise any combination of various types of non-transitory computer readable storage medium including magnetic media, optical media, random access memory (RAM), read only memory (ROM), etc. Computer 930 can comprise any type of computing device such as a network server, a desktop computer, a laptop, a handheld device, a mobile phone, a pager, a personal data assistant, etc.

Additive manufacturing processes begin with a non-transitory computer readable storage medium (e.g., memory 932, storage system 942, etc.) storing code 920 (e.g., including fill instructions 160 and/or component model 30) representative of component 12 and repaired component 100 (FIGS. 1-2). As noted, code 920 includes a set of computer-executable instructions defining outer electrode that can be used to physically generate the tip, upon execution of the code by system 900. For example, code 920 may include a precisely defined 3D model of outer electrode and can be generated from any of a large variety of well-known computer aided design (CAD) software systems such as AutoCAD®, TurboCAD®, DesignCAD 3D Max, etc. In this regard, code 920 can take any now known or later developed file format. For example, code 920 may be in the Standard Tessellation Language (STL) which was created for stereolithography CAD programs of 3D Systems, or an additive manufacturing file (AMF), which is an American Society of Mechanical Engineers (ASME) standard that is an extensible markup-language (XML) based format designed to allow any CAD software to describe the shape and composition of any three-dimensional object to be fabricated on any AM printer. Code 920 may be translated between different formats, converted into a set of data signals and transmitted, received as a set of data signals and converted to code, stored, etc., as necessary. Code 920 may be an input to system 900 and may come from a part designer, an intellectual property (IP) provider, a design company, the operator or owner of system 900, or from other sources. In any event, AM control system 904 executes code 920, dividing fill material 90 for component 12, 100 (FIGS. 1-2) into a series of thin slices that it assembles using AM printer 906 in successive layers of liquid, powder, sheet or other material. In the DMLM/DMLD example, each layer is melted to the exact geometry defined by code 920 and fused to the preceding layer. Subsequently, the repaired component 100 may be exposed to any variety of finishing processes, e.g., minor machining, sealing, polishing, assembly to other part of the igniter tip, etc. However, as noted herein, using DMLM and/or DMLD may not require subsequent heat treatment of repaired component 100, which may reduce costs and improve the usable life of that repaired component 100 when compared with conventional approaches.

It is understood that in the flow diagram shown and described herein, other processes may be performed while not being shown, and the order of processes can be rearranged according to various embodiments. Additionally, intermediate processes may be performed between one or more described processes. The flow of processes shown and described herein is not to be construed as limiting of the various embodiments.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

Various aspects and embodiments of the present invention are defined by the following clauses:
1. A method comprising:
   removing a turbine component from a turbine rotor assembly;
   identifying at least one flaw in the turbine component; and
   direct metal laser melting (DMLM) or direct metal laser depositing (DMLD) a fill material to fill the at least one flaw in the turbine component, forming a repaired turbine component.
2. The method of clause 1, wherein the repaired turbine component does not require a heat treatment to set the fill material in the at least one flaw after the DMLM or the DMLD.
3. The method of clause 1, further comprising installing the repaired turbine component in the turbine rotor assembly after the DMLM or the DMLD.
4. The method of clause 1, wherein the turbine component includes a turbine blade.
5. The method of clause 1, wherein the fill material includes stainless steel, maraging steel, high-CrMoV steel, a nickel-based alloy or martensitic steel.
6. The method of clause 1, wherein the fill material includes stainless steel 304 (SS304), stainless steel 314 (SS314) or stainless steel 316 (SS316).
7. The method of clause 1, wherein the identifying of the at least one flaw in the turbine component includes optically scanning the turbine component to optically detect the at least one flaw.
8. A system comprising:
   an additive manufacturing system configured to receive a scan of a turbine component removed from a turbine rotor assembly; and
   a control system coupled with the additive manufacturing system, the control system configured to:
      identify at least one flaw in the turbine component based upon the scan; and
      instruct the additive manufacturing system to additively manufacture a fill material in the at least one flaw in the turbine component to form a repaired turbine component, in response to identifying the at least one flaw in the turbine component.
9. The system of clause 8, wherein the additive manufacturing system includes a scanning system for performing the scan of the turbine component, wherein the scanning system includes an optical scanning system, a blue light scanning system, a white light scanning system or a laser scanning system.
10. The system of clause 8, wherein the additive manufacturing system includes a direct metal laser melting (DMLM) system or a direct metal laser deposition (DMLD) system.
11. The system of clause 8, wherein the repaired turbine component does not require a heat treatment to set the fill material in the at least one flaw after the additively manufactured fill material is applied to the at least one flaw.
12. The system of clause 8, further comprising a robot coupled with the control system, the robot configured to at least one of remove the turbine component from the turbine rotor assembly or install the repaired turbine component in the turbine rotor assembly.
13. The system of clause 8, wherein the steam turbine component includes a turbine blade.
14. The system of clause 8, wherein the fill material includes stainless steel, maraging steel, high-CrMoV steel, a nickel-based alloy or martensitic steel.
15. The system of clause 8, wherein the fill material includes stainless steel 304 (SS304), stainless steel 314 (SS314) or stainless steel 316 (SS316).
16. A method comprising:
   removing a turbine component from a turbine rotor assembly;
   optically scanning the turbine component to identify at least one flaw in the turbine component; and
   direct metal laser melting (DMLM) or direct metal laser depositing (DMLD) a fill material to fill the at least one flaw in the turbine component, forming a repaired turbine component, wherein the repaired turbine component does not require a heat treatment to set the fill material in the at least one flaw after the DMLM or the DMLD.
17. The method of clause 16, further comprising installing the repaired turbine component in the turbine rotor assembly after the DMLM or the DMLD.
18. The method of clause 16, wherein the turbine component includes a turbine blade.
19. The method of clause 1, wherein the fill material includes stainless steel, maraging steel, high-CrMoV steel, a nickel-based alloy or martensitic steel.

## Claims

1. A method comprising:
removing a turbine component (12) from a turbine rotor assembly (14);
identifying at least one flaw (16) in the turbine component (12); and
direct metal laser melting (DMLM) or direct metal laser depositing (DMLD) a fill material (90) to fill the at least one flaw (16) in the turbine component (12), forming a repaired turbine component (100).

2. The method of claim 1, wherein the repaired turbine component (100) does not require a heat treatment to set the fill material (90) in the at least one flaw (16) after the DMLM or the DMLD.

3. The method of claim 1, further comprising installing the repaired turbine component (100) in the turbine rotor assembly (14) after the DMLM or the DMLD.

4. The method of claim 1, wherein the turbine component (12) includes a turbine blade.

5. The method of claim 1, wherein the fill material (90) includes stainless steel maraging steel, high-CrMoV steel, a nickel-based alloy or martensitic steel.

6. The method of claim 1, wherein the fill material (90) includes stainless steel 304 (SS304), stainless steel 314 (SS314) or stainless steel 316 (SS316).

7. The method of claim 1, wherein the identifying of the at least one flaw (16) in the turbine component (12) includes optically scanning the turbine component (12) to optically detect the at least one flaw (16).

8. A system (2) comprising:
an additive manufacturing system (900) configured to receive a scan of a turbine component (12) removed from a turbine rotor assembly (14); and
a control system (40) coupled with the additive manufacturing system (900), the control system (40) configured to:
identify at least one flaw (16) in the turbine component (12) based upon the scan; and
instruct the additive manufacturing system (900) to additively manufacture a fill material (90) in the at least one flaw (16) in the turbine component (12) to form a repaired turbine component (100), in response to identifying the at least one flaw (16) in the turbine component (12).

9. The system (2) of claim 8, wherein the additive manufacturing system (900) includes a scanning system (10) for performing the scan of the turbine component (12), wherein the scanning system (10) includes an optical scanning system, a blue light scanning system, a white light scanning system or a laser scanning system.

10. The system (2) of claim 8, wherein the additive manufacturing system (900) includes a direct metal laser melting (DMLM) system or a direct metal laser deposition (DMLD) system.

11. The system (2) of claim 8, wherein the repaired turbine component (100) does not require a heat treatment to set the fill material (90) in the at least one flaw (16) after the additively manufactured fill material (90) is applied to the at least one flaw (16).

12. The system (2) of claim 8, further comprising a robot coupled with the control system (40), the robot configured to at least one of remove the turbine component (12) from the turbine rotor assembly (14) or install the repaired turbine component (100) in the turbine rotor assembly (14).

13. A method comprising:
removing a turbine component (12) from a turbine rotor assembly (14);
optically scanning the turbine component (12) to identify at least one flaw (16) in the turbine component (12); and
direct metal laser melting (DMLM) or direct metal laser depositing (DMLD) a fill material (90) to fill the at least one flaw (16) in the turbine component (12), forming a repaired turbine component (100), wherein the repaired turbine component (100) does not require a heat treatment to set the fill material (90) in the at least one flaw (16) after the DMLM or the DMLD.

14. The method of claim 13, further comprising installing the repaired turbine component (100) in the turbine rotor assembly (14) after the DMLM or the DMLD.

15. The method of claim 13, wherein the turbine component (12) includes a turbine blade.
